# EUROPÄISCHE PATENTANMELDUNG

(11) **EP 2 037 711 A1**
(43) Veröffentlichungstag der Anmeldung: **18.03.2009**
(21) Anmeldenummer: 08105187.2
(22) Anmeldetag: 29.08.2008
(51) Int. Cl.: H04W 48/04

(54) **Verfahren zum Kontrollieren mindestens einer Kommunikationsfunktion eines mobilen Kommunikationsgerätes in Abhängigkeit des Aufenthaltsortes**

(30) Priorität: 17.09.2007 DE 102007044343
(71) Anmelder: Robert Bosch GmbH, 70442 Stuttgart (DE)
(72) Erfinder: Rijke, Jos, 4823MT, Breda (NL)

(57) **Zusammenfassung**

Die Erfindung betrifft ein Verfahren zum Kontrollieren mindestens einer Kommunikationsfunktion eines mobilen Kommunikationsgeräts, wobei das mobile Kommunikationsgerät zur Bestimmung seines Orts von mindestens einer lokalen Signalstation (16, 18) Signale empfängt und eine Durchführung der mindestens einen Kommunikationsfunktion von dem mobilen Kommunikationsgerät in Abhängigkeit des bestimmten Orts selbsttätig erlaubt oder verboten wird. Erfindungsgemäß ist zudem eine Telefonanlage und eine mobiles Kommunikationsgerät vorgesehen.

## Beschreibung

Die Erfindung betrifft ein Verfahren zum Kontrollieren mindestens einer Kommunikationsfunktion, eine Telefonanlage, ein mobiles Kommunikationsgerät, ein Computerprogramm und ein Computerprogrammprodukt.

### Stand der Technik

Bei einer mobilen, drahtlosen Telekommunikation ist vorgesehen, dass ein mobiles Kommunikationsgerät mit mindestens einer Sende-/Empfangsstation Signale austauscht, so dass über einen derartigen Austausch von Signalen ein Datenaustausch bereitgestellt wird, über den bspw. eine telefonische Verbindung zwischen zwei Teilnehmern bzw. Kommunikationsgeräten möglich ist.

In einigen Fällen ist jedoch vorgesehen, dass ein derartiger Datenaustausch nicht oder nur in eingeschränktem Umfang erwünscht ist.

In der Druckschrift EP 1 686 823 A1 sind ein Verfahren und eine Vorrichtung zur Einschränkung einer Nutzung von mobilen Kommunikationsgeräten beschrieben. Das Verfahren und die Vorrichtung sind vorrangig für Einrichtungen wie Theater oder Kinos vorgesehen, in denen Telefonate in der Regel störend sind. Hierzu ist in der Druckschrift EP 1 686 823 A1 offenbart, dass ein Kommunikationsnetzwerk eine Anzahl von Verbindungsmodulen aufweist, die mindestens einem mobilen Kommunikationsgerät einen Zugang zu bestimmten Funktionen, die von dem Kommunikationsnetzwerk bereitgestellt werden, ermöglicht. Dabei ist dieses Kommunikationsnetzwerk derart ausgestaltet, dass den mobilen Kommunikationsgeräten ortsabhängig und/oder situationsbedingt lediglich zu einem Teil der Funktionen ein Zugang ermöglicht wird.

Ein Verfahren zum Unterdrücken einer fotographischen Funktion ist aus der Druckschrift JP 2005/340980 bekannt. Hierbei ist in einem Mobiltelefon ein Fotoapparat integriert. Um ein Fotografieren in bestimmten räumlichen Bereichen zu verbieten, ist eine Sendeeinrichtung vorgesehen, die dazu ausgebildet ist, Signale zum Sperren von Fotografiefunktionen auszusenden. Derartige Signale werden von einem Empfangsmodul des Mobiltelefons empfangen und aufgrund dessen die Fotografiefunktion unterbunden.

### Offenbarung der Erfindung

Die Erfindung betrifft ein Verfahren zum Kontrollieren mindestens einer Kommunikationsfunktion eines mobilen Kommunikationsgeräts, wobei das mobile Kommunikationsgerät zur Bestimmung seines Orts von mindestens einer lokalen Signalstation Signale empfängt und eine Durchführung der mindestens einen Kommunikationsfunktion von dem mobilen Kommunikationsgerät in Abhängigkeit des bestimmten Orts selbsttätig erlaubt oder verboten wird.

Hierbei sind mit Kommunikationsfunktionen üblicherweise Anruffunktionen gemeint, so dass durch das Verfahren in Ausgestaltung vorgesehen ist, dass das mobile Kommunikationsgerät in Abhängigkeit des Orts bestimmte Anrufe durchführen oder nicht durchführen kann.

Weiterhin ist vorgesehen, dass der Ort bzw. eine Position, an dem bzw. an der sich das Kommunikationsgerät befindet, von dem Kommunikationsgerät selbsttätig bestimmt wird. Dies geschieht unter Berücksichtigung von Signalen, die das mobile Kommunikationsgerät von der mindestens einen lokalen Signalstation empfängt, wobei diese Signale bspw. zur Ortung jedoch nicht zur Bereitstellung einer Kommunikationsverbindung ausgebildet sind. Demnach kann über derartige Signale zur Ortung typischerweise kein Anruf übermittelt werden. Die zur Ortung und geeigneten Signale werden üblicherweise über elektromagnetische Wellen übertragen.

In Ausgestaltung des Verfahrens wird unterschieden, ob sich das Kommunikationsgerät in einem beschränkten Bereich oder in einem unbeschränkten Bereich befindet, wobei die mindestens eine Kommunikationsfunktion ermöglicht wird, wenn sich das mobile Kommunikationsgerät in dem unbeschränkten Bereich befindet, und wobei die mindestens eine Kommunikationsfunktion verboten wird, wenn sich das mobile Kommunikationsgerät in dem beschränkten Bereich befindet.

Für den Fall, dass die mindestens eine Kommunikationsfunktion für das mindestens eine mobile Kommunikationsgerät verboten ist, ist für das mindestens eine mobile Kommunikationsgerät lediglich eine Aufnahme einer Kommunikationsverbindung mit ausgewählten weiteren Kommunikationsgeräten gestattet, wohingegen eine Aufnahme einer Kommunikationsverbindung zu anderen Kommunikationsgeräten, die ausgeschlossen und somit nicht ausgewählt sind, unterbunden wird.

Bei einer Variante des Verfahrens versendet die mindestens eine lokale Signalstation mit den ausgesendeten Signalen eine Identitätskennung. Über diese Identitätskennung kann die mobile Signalstation bestimmen oder ableiten, an welchem Ort oder welcher Position sie sich befindet. Die Identitätskennung kann zudem die eine Information darüber enthalten, welche Kommunikationsfunktion in Abhängigkeit des erlaubt oder verboten ist. Weiterhin kann die Identitätskennung eine Information über die mindestens eines verbotene Kommunikationsfunktion umfassen. Ob die mindestens eine Kommunikationsfunktion nun durchgeführt werden darf oder nicht, wird von dem mobilen Kommunikationsgerät typischerweise ortsabhängig entschieden. Die von der mindestens einen lokalen Signalstation über die Identitätskennung bereitgestellte Information kann u. a. dem Zweck dienen, welche Maßnahmen seitens des mobilen Kommunikationsgeräts ergriffen werden können, um die mindestens eine Kommunikationsfunktion zu erlauben oder zu verbieten.

Diese Identitätskennung kann von dem mobilen Kommunikationsgerät empfangen werden. Das mobile Kommunikationsgerät kann aufgrund der Identitätskennung entscheiden, ob es sich in einem beschränkten oder unbeschränkten Bereich befindet, so dass das mobile Kommunikationsgerät in Abhängigkeit des Orts entscheidet, welche Kommunikationsfunktion erlaubt oder verboten ist.

Weiterhin kann durch mindestens eine Ziffer, Ziffernkombination oder Zeichenkette als eine mögliche Information dieses Identitätscodes angezeigt werden, welche Kommunikationsfunktion im Bereich jener lokalen Signalstation, von der aus die Identitätskennung ortsbezogen empfangen werden kann, erlaubt oder verboten ist. Dabei kann durch die mindestens eine Ziffer bspw. angezeigt werden, dass eine Kommunikationsverbindung zu einem Kommunikationsgerät, dessen Rufnummer mit dieser mindestens einen Ziffer beginnt, verboten ist.

Eine Auswahl von weiteren Kommunikationsgeräten und somit von weiteren Teilnehmern eines Telekommunikationsnetzwerks oder einer Telekommunikationsanlage kann bspw. durch eine Ziffernkombination einer Rufnummer der weiteren Kommunikationsgeräte erfolgen. So kann u. a. vorgesehen sein, dass den anderen Kommunikationsgeräten, die ausgeschlossen, d.h. nicht ausgewählt sind und zu denen eine Kommunikationsverbindung zu unterbinden ist, falls die mindestens eine Kommunikationsfunktion bzw. Anruffunktion verboten ist, zu Beginn ihrer Rufnummer die mindestens eine bestimmte Ziffer aufweisen.

Falls das mindestens eine mobile Kommunikationsgerät als Teilnehmer einer örtlich oder häuslich gebundenen Telefonanlage ausgebildet ist, kann dies bedeuten, dass das mindestens eine mobile Kommunikationsgerät lediglich zu Teilnehmern derselben Telefonanlage eine Kommunikationsverbindung bereitstellt, wenn die mindestens eine Kommunikationsfunktion verboten sein sollte. Zu anderen Kommunikationsgeräten, in der Regel Teilnehmern außerhalb der Telefonanlage, zu deren Rufnummer als erste Ziffer bspw. mindestens eine "0" vorzuwählen ist, wird keine Kommunikationsverbindung bereitgestellt.

Bei dem Verfahren wird u. a. durch mindestens ein Hinweissignal, das von dem mobilen Kommunikationsgerät bereitgestellt wird, angezeigt, ob die mindestens eine Kommunikationsfunktion erlaubt oder verboten ist.

Bei dem mindestens einen Hinweissignal kann es sich um ein optisches und/oder visuelles Hinweissignal handeln. Dabei wird ein optisches Hinweissignal in der Regel über ein Anzeigefeld bzw. Display des mobilen Kommunikationsgeräts bereitgestellt. Ein akustisches Hinweissignal kann in Form eines Hinweistons bereitgestellt werden, durch den angezeigt wird, dass ein Nutzer des mobilen Kommunikationsgeräts versucht, ein anderes, ausgeschlossenes Kommunikationsgerät anzurufen, so dass dem Nutzer signalisiert wird, dass ein derartiger Anruf verboten ist.

Die erfindungsgemäße Telefonanlage, weist eine Anzahl lokale Signalstationen auf. Außerdem ist dieser Telefonanlage mindestens ein mobiles Kommunikationsgerät zugeordnet, wobei das mindestens eine mobile Kommunikationsgerät zur Bestimmung seines Orts von mindestens einer lokalen Signalstation Signale empfängt, und wobei das mindestens eine mobile Kommunikationsgerät dazu ausgebildet ist, eine Durchführung mindestens einer Kommunikationsfunktion für das mindestens eine mobile Kommunikationsgerät in Abhängigkeit des Orts selbsttätig zu erlauben oder zu verbieten.

Diese Telefonanlage kann mindestens eine Basisstation aufweisen, wobei diese mindestens eine Basisstation zum Bereitstellen einer Kommunikationsverbindung zwischen dem mindestens einen mobilen Kommunikationsgerät und einem weiteren Kommunikationsgerät mit dem mindestens einen mobilen Kommunikationsgerät Signale austauscht.

Die mindestens eine Basisstation bzw. eine entsprechende Sende-/Empfangsstation ist innerhalb der Telefonanlage, wie bei anderen Telefonanlagen bzw. Telefonnetzwerken üblich, zum drahtlosen Austausch von Signalen, über die Kommunikationsverbindungen realisiert werden, ausgebildet. Hiervon unterscheiden sich die beschriebenen lokalen Signalstationen sowie die von derartigen lokalen Signalstationen drahtlos übermittelten Signale, die in Ausgestaltung vorrangig einer Ortung des mindestens einen mobilen Kommunikationsgeräts und ggf. der Übermittlung einer Identitätskennung dienen. Ein weiterer Austausch von Daten zwischen dem mindestens einen Kommunikationsgerät und der mindestens einen Signalstation zur Bereitstellung einer Kommunikationsverbindung ist nicht vorgesehen, dennoch kann die mindestens eine lokale Signalstation in mindestens einer Basisstation integriert sein.

Der Telefonanlage kann in einer Variante eine Anzahl weiterer Kommunikationsgeräte als Teilnehmer zugeordnet sein, wobei für den Fall, dass die mindestens eine Anruffunktion für das mindestens eine mobile Kommunikationsgerät verboten ist, für das mindestens eine mobile Kommunikationsgerät lediglich eine Aufnahme einer Kommunikationsverbindung mit einem derartigen weiteren Kommunikationsgerät und somit eines weiteren Teilnehmers der Telefonanlage gestattet ist, wohingegen eine Aufnahme einer Kommunikationsverbindung zu anderen Kommunikationsgeräten und somit Teilnehmern, die nicht der Telefonanlage zugeordnet sind, unterbunden wird.

Die Erfindung betrifft auch ein mobiles Kommunikationsgerät, das dazu ausgebildet ist, zur Bestimmung seines Orts von mindestens einer lokalen Signalstation Signale zu empfangen und eine Durchführung mindestens einer Anruffunktion in Abhängigkeit des Orts selbsttätig zu erlauben oder zu verbieten.

Dieses mobile Kommunikationsgerät ist dazu ausgebildet, mindestens ein Hinweissignal bereitzustellen, wobei durch dieses mindestens eine Hinweissignal angezeigt wird, ob die mindestens eine Anruffunktion erlaubt oder verboten ist.

Das mobile Kommunikationsgerät ist zur Durchführung sämtlicher Schritte des erfindungsgemäßen Verfahrens ausgebildet. Weiterhin ist vorgesehen, dass dieses mobile Kommunikationsgerät als Komponente der beschriebenen Telefonanlage ausgebildet sein kann. Einzelne Funktionen der Telefonanlage oder des mobilen Kommunikationsgeräts können als Schritte des Verfahrens realisiert werden.

Zur Realisierung der Erfindung ist typischerweise vorgesehen, dass das mindestens eine mobile Kommunikationsgerät zwar mit der Telefonanlage zusammenwirkt, um somit die Signale zur Bestimmung des Orts von mindestens einer lokalen Signalstation zu empfangen. Allerdings ist vorgesehen, dass eine Entscheidung darüber, ob das mindestens eine mobile Kommunikationsgerät die mindestens eine Kommunikationsfunktion bzw. Anruffunktion durchführen kann oder ob eine derartige Durchführung verboten ist, das mindestens eine Kommunikationsgerät selbsttätig trifft.

Bei einer Ausführungsform der Erfindung ist vorgesehen, dass das mindestens eine mobile Kommunikationsgerät eine Entscheidung darüber, ob die mindestens eine Kommunikationsfunktion ortsabhängig durchgeführt werden kann oder nicht durchgeführt werden kann, selbsttätig und somit autark und demnach unabhängig von Entscheidungen seitens der Telefonanlage trifft.

Das erfindungsgemäße Computerprogramm mit Programmcodemitteln ist dazu ausgebildet, alle Schritte eines erfindungsgemäßen Verfahrens durchzuführen, wenn das Computerprogramm auf einem Computer oder einer entsprechenden Recheneinheit, insbesondere in einem beschriebenen mobilen Kommunikationsgerät, ausgeführt wird.

Die Erfindung weist weiterhin ein Computerprogrammprodukt mit Programmcodemitteln auf, die auf einem computerlesbaren Datenträger gespeichert sind, um alle Schritte eines beschriebenen Verfahrens durchzuführen, wenn das Computerprogramm auf einem Computer oder einer entsprechenden Recheneinheit, insbesondere in einem erfindungsgemäßen mobilen Kommunikationsgerät, ausgeführt wird.

Mit der vorliegenden Erfindung ist unter anderem ein ortsabhängiges Erlauben und Blockieren von bestimmten Telefonaten, d.h. ausgehende Anrufe als mögliche Kommunikationsfunktionen, für ein mobiles Kommunikationsgerät in einem eingegrenzten räumlichen Bereich möglich.

Das im Rahmen der Erfindung bereitgestellte u. a. personensichere mobile Kommunikationsgerät kann bspw. als ein Mobiltelefon oder ein entsprechender Handapparat ausgebildet sein, das bzw. der zur Nutzung in einer sogenannten DECT (Digital Enhanced Cordless Telecommunications)-Infrastruktur zur Realisierung einer schnurlosen Telekommunikation, benutzt werden kann. Hierbei ist eine Standard-DECT-Infrastruktur, bspw. für einen Bürobereich, die einen DECT-Server, eine PABX (privat/exchange)-Telefonanlage und/oder Basisstationen als Zugangspunkte aufweist, durch ein Zweiwege-LRMS (Low Rate Messaging Services) mit dem DECT-Server auf den gleichen DECT-Frequenzen erweiterbar. Dies bedeutet in Ausgestaltung, dass das mobile Kommunikationsgerät zur Bestimmung eines Orts und ggf. zum Empfang der Identitätskennung mit der mindestens einen lokalen Signalstation Signale, die auf einer ersten Frequenz, bspw. Ortungsfrequenz, einer elektromagnetischer Welle übermittelt werden, empfängt. Signale, die zur Bereitstellung einer Kommunikationsverbindung vorgesehen sind, und die das mobile Kommunikationsgerät mit den Basisstationen austauscht, werden auf einer zweiten Frequenz, bspw. Kommunikationsfrequenz, übertragen. Weiterhin ist ein personal security management system (PS-MANSYS) vorgesehen.

Das mobile Kommunikationsgerät weist regelmäßig die Standardfunktionen für ein DECT-System mit GAP (Generic Acces Profile)-konformen Funktionen auf. Zudem kann vorgesehen sein, dass das mobile Kommunikationsgerät mit Eigenschaften zur Bereitstellung einer personengebundenen Sicherheit wie bspw. Modulen zum Nachweis einer Nichtbewegung, einer schnellen Bewegung, eines Sturzes, eines Diebstahls, eines manuellen Alarmknopfs, eines Ortungsempfängers sowie einem Versenden von Kurznachrichten aufweist.

Eine mögliche Anwendung der Erfindung kann für Vollzugsanstalten vorgesehen sein. In Vollzugsanstalten kann es Beschränkungen bei einer Nutzung von mobilen Kommunikationsgeräten bzw. Telefonen in bestimmten Abschnitten oder Bereichen geben, um somit unerwünschte Anrufe von Insassen der Vollzugsanstalten nach außen zu unterbinden. Hierzu weist eine Ausgestaltung eines mobilen Kommunikationsgeräts mindestens eine beschriebene spezielle Funktion auf, mit der dieses mobile Kommunikationsgerät aufgrund von Signalen, die es von der mindestens einen Signalstation empfängt, seinen Ort bestimmen und unter Kenntnis des Orts selbsttätig oder automatisch entscheiden kann, ob und wie eine Kommunikationsfunktion von einem Nutzer des mobilen Kommunikationsgeräts durchgeführt werden kann. Hierbei ist zur Bestimmung des Orts insbesondere vorgesehen, dass bestimmt wird, ob sich das Kommunikationsgerät in einem beschränkten oder unbeschränkten Bereich befindet. Falls nun ein Wärter innerhalb der Vollzugsanstalt, der dieses mobile Kommunikationsgerät nutzt, einen bestimmten Bereich, in dem sich Insassen der Vollzugsanstalt aufhalten, betritt, ist das mobile Kommunikationsgerät dazu ausgestaltet, einen Aufenthalt in diesem Bereich nachzuweisen, indem das mobile Kommunikationsgerät von lokalen Signalstationen ausgesandte Signale empfängt, wobei die Identitätskennung oder ein Identitätscode einer jeweiligen lokalen Signalstation, die oder der über die Signale übertragen wird, bspw. mit einer bestimmten Ziffer beginnt.

Ein Ortsempfänger, der als eine Komponente des mobilen Kommunikationsgeräts ausgebildet ist, weist nach, dass sich das mobile Kommunikationsgerät in dem besonderen Bereich befindet. Somit kann innerhalb dieser besonderen Bereiche oder Zonen das Wählen von bestimmten Nummern, bspw. das Wählen einer "0" am Anfang einer Rufnummer unterbunden werden. Somit ist es mit dem im bspw. beschränkten Bereich befindliche mobile Kommunikationsgerät nicht möglich, eine Kommunikationsfunktion nach außen bereitzustellen und Kontakt mit einem Teilnehmer außerhalb einer Telefonanlage aufzunehmen. Weiterhin wird bei einem Wählen sämtlicher anderer Nummern, d.h. interner Nummern von Kommunikationsgeräten und somit von Teilnehmern der Telefonanlage, weiterhin eine Kommunikationsverbindung bereitgestellt.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Kurze Beschreibung der Zeichnungen

- Figur 1: zeigt in schematischer Darstellung einen Grundriss einer als Vollzugsanstalt ausgebildeten Einrichtung sowie diverse lokale Signalstationen, die bei einer ersten Ausführungsform eines erfindungsgemäßen Verfahrens zum Einsatz kommen.
- Figur 2: zeigt in schematischer Darstellung eine Ausführungsform eines mobilen Kommunikationsgeräts bei Durchführung einer zweiten Ausführungsform eines erfindungsgemäßen Verfahrens.

### Ausführungsformen der Erfindung

Die Erfindung ist anhand von Ausführungsbeispielen in der Zeichnung schematisch dargestellt und wird im folgenden unter Bezugnahme auf die Zeichnung ausführlich beschrieben.

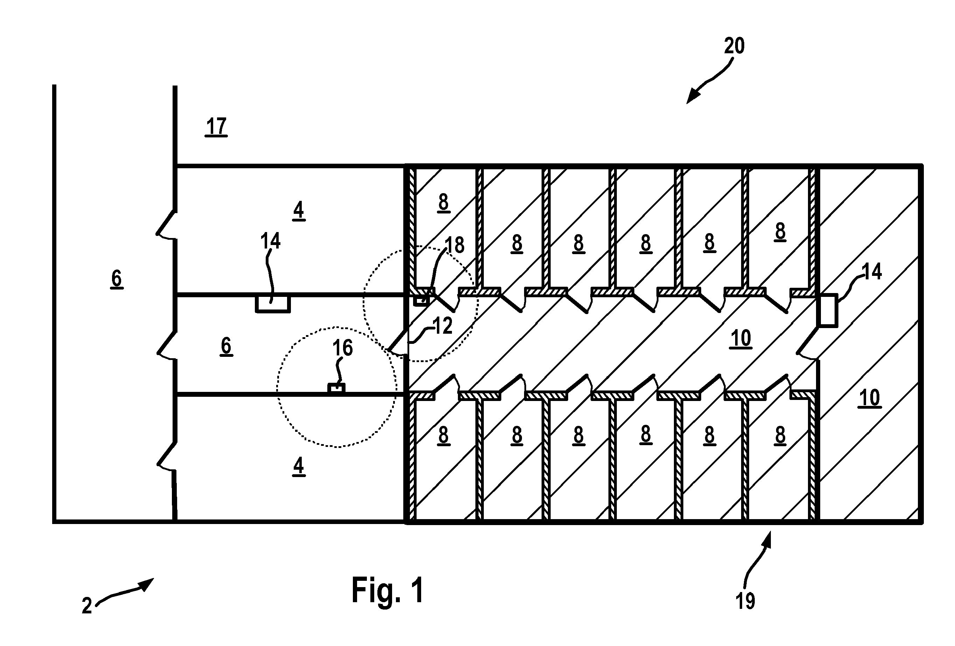

Die in Figur 1 im Grundriss schematisch dargestellte Vollzugsanstalt 2 umfasst auf der linken Seite einen Verwaltungsbereich mit Verwaltungsräumen 4 sowie ersten Korridoren 6. Außerdem ist in der Vollzugsanstalt 2 ein Gefangenenbereich mit mehreren Zellen 8 und zweiten Korridoren 10 vorgesehen. Durch diverse Türen können die beschriebenen Räume verlassen oder betreten werden. Als einziger Durchgang zwischen dem Verwaltungsbereich links und dem Gefangenenbereich rechts ist eine Trenntür 12 vorgesehen.

Weiterhin zeigt der Grundriss der Vollzugsanstalt 2 zwei Basisstationen 14 sowie zwei lokale Signalstationen 16, 18 einer lokalen Telefonanlage 20. Dabei ist eine erste lokale Signalstation 16 für einen unbeschränkten Bereich 17, hier den Verwaltungsbereich, vorgesehen. Eine zweite lokale Signalstation 18 ist für einen beschränkten Bereich 19, hier den Gefangenenbereich, vorgesehen und in dem zweiten Korridor 10 innerhalb des Gefangenenbereichs angeordnet. Der beschränkte Bereich ist in Figur 1 durch Querstriche hervorgehoben und umfasst die Zellen 8 und die zweiten Korridore 10. Dieser beschränkte Bereich 19 ist durch Wände der Zellen 8 und der zweiten Korridore 10 von dem unbeschränkten Bereich 17 begrenzt. Durch die Wände sowie die Trenntür 12 können Signale, die die beiden Signalstationen 16, 18 aussenden, abgeschirmt werden. Somit ist es möglich, dass das Kommunikationsgerät in dem unbeschränkten Bereich 17 nur Signale der ersten Signalstation 16 jedoch keine Signale von der zweiten Signalstation 18 empfangen kann. Umgekehrt ist vorgesehen, dass das Kommunikationsgerät in dem beschränkten Bereich 19 nur Signale von der zweiten Signalstation 18 jedoch keine Signale von der ersten Signalstation 16 empfangen kann. Somit kann das Kommunikationsgerät entscheiden, ob es sich im beschränkten Bereich 19 oder im unbeschränkten Bereich 17 befindet.

Falls nun ein Wärter der Vollzugsanstalt 2 mit einem hier nicht dargestellten, mobilen Kommunikationsgerät ausgehend von dem ersten Korridor 6 des unbeschränkten Bereichs 17 über die Trenntür 12 den zweiten Korridor 10 des beschränkten Bereichs 19 betritt, ist vorgesehen, dass sein Kommunikationsgerät Signale der zweiten Signalstation 18 für den beschränkten Bereich 19 empfängt.

In der vorliegenden Ausführungsform sendet diese zweite Signalstation 18 einen Identitätscode (ID) mit einer fest zugeordneten, jedoch bedarfsweise einstellbaren Ziffer, die besagt, dass sich das Kommunikationsgerät in dem Gefangenenbereich und somit dem beschränkten Bereich 19 der Vollzugsanstalt 2 befindet. Hierzu ist außerdem vorgesehen, dass auf einem Anzeigefeld des Kommunikationsgeräts als Hinweissignal ein Anzeigesymbol "R" erscheint, das dem Wärter anzeigt, dass sich dieser nun mit dem Kommunikationsgerät innerhalb des beschränkten Bereichs 19 befindet.

Falls nun vorgesehen sein sollte, dass jemand von dem beschränkten Bereich 19 einen Anruf in die Außenwelt, d.h. zu einem Kommunikationsgerät außerhalb der Vollzugsanstalt 2, das kein Teilnehmer der Telefonanlage 20 der Vollzugsanstalt 2 ist, durchführen will, ist es wie auch bei anderen geschlossenen Telefonanlagen üblich, dass eine bestimmte Ziffer, hier die "0", vorzuwählen ist, um diesen Teilnehmer außerhalb der Telefonanlage zu erreichen.

Bei einer Durchführung des Verfahrens ist nun vorgesehen, dass der Teilnehmer, hier der Wärter, der sich mit dem mobilen Kommunikationsgerät innerhalb des beschränkten Bereichs 19 befindet, ein akustisches Hinweissignal als Fehlersignal über einen Lautsprecher des Kommunikationsgeräts vernimmt, wenn er die Ziffer "0" nach außen wählen will. Weiterhin ist vorgesehen, dass das Hinweissymbol "R" auf dem Anzeigefeld des Kommunikationsgeräts zu blinken beginnt. Durch diese Hinweissignale wird der Benutzer darauf hingewiesen, dass es verboten ist, ausgehend von dem beschränkten Bereich 19, hier dem Gefangenenbereich, Anrufe in die Außenwelt außerhalb der Vollzugsanstalt 2 zu tätigen. Allerdings ist es möglich, weitere Kommunikationsgeräte der Telefonanlage der Vollzugsanstalt 2 dennoch auch von dem beschränkten Bereich 19 anzurufen, da deren Rufnummern nicht mit der bestimmten Ziffer für die Außenwelt beginnen.

Falls sich der Wärter mit seinem Kommunikationsgerät wieder innerhalb des unbeschränkten Bereichs 17, d.h. dem Verwaltungsbereich bewegt, werden von dem mobilen Kommunikationsgerät Signale der ersten Signalstation 16 empfangen. Es ist hier vorgesehen, dass eine Identität dieser ersten Signalstation 16 nicht mit der vorgegebenen Ziffer beginnt, was bedeutet, dass sich das Kommunikationsgerät in dem Verwaltungsbereich und somit dem unbeschränkten Bereich befindet. Somit ist auf dem Anzeigefeld des mobilen Kommunikationsgeräts das Anzeigesymbol "R" nicht angegeben, so dass eine Beschränkung der Anrufe nach außen außerhalb der Vollzugsanstalt 2 nicht mehr gegeben ist.

Durch geeignetes Aufstellen der Signalstationen 16, 18, nämlich der ersten Signalstation 16 für den unbeschränkten Bereich 17 innerhalb des unbeschränkten Bereichs 17 und der zweiten Signalstation 18 für den beschränkten Bereich 19 innerhalb des beschränkten Bereichs 19, können die beiden Bereiche 17, 19 für Teilnehmer der Telefonanlage der Vollzugsanstalt 2 räumlich definiert werden. Hierzu werden die Signale der unterschiedlichen Signalstationen 16, 18 durch die Wände und Türen, insbesondere die Trenntür 12 der Vollzugsanstalt 2 abgeschirmt.

Weiterhin können diese Signalstationen 16, 18 auch für räumliche Funktionalitäten genutzt werden. Falls ein Wächter Alarm geben sollte, werden von dem Kommunikationsgerät Informationen über die zuletzt passierten Signalstationen 16, 18 zu einer Zentrale übermittelt, so dass durch Hinzufügen der räumlichen Signalstationen 16, 18 an jeder Zelle ein engmaschiges Netz zur Ortung innerhalb der Vollzugsanstalt 2 bereitgestellt werden kann. Eine Reichweite derartiger Signalstationen 16, 18 kann auf weniger als 1 m, insbesondere 0,5 m, zu mehreren Metern, insbesondere bis 4,5 m, eingestellt werden.

Eine räumliche Begrenzung ist jedoch nicht mit den Basisstationen 14 gekoppelt. Wobei eine Reichweite derartiger Basisstationen 14 bis zu 100 m betragen kann. Eine Entscheidung darüber, in welchen der beiden möglichen Bereiche 17, 19 sich das Kommunikationsgerät befindet, wird demnach nicht durch eine Zentrale und somit die Basisstationen 14 der Telefonanlage festgelegt. Ein Nachweis und somit eine Entscheidung darüber wird allein von dem mobilen Kommunikationsgerät in Abhängigkeit einer Position zu den Signalstationen 16, 18 getroffen. Weiterhin ist vorgesehen, dass an die Zentrale eine Information darüber übermittelt wird, dass sich das Kommunikationsgerät innerhalb des beschränkten Bereichs 19 bewegt, wobei durch Austausch von Signalen des Kommunikationsgeräts mit den Signalstationen 16, 18 ein genaues Bewegungsschema des Kommunikationsgeräts innerhalb der Vollzugsanstalt 2 nachvollziehbar ist.

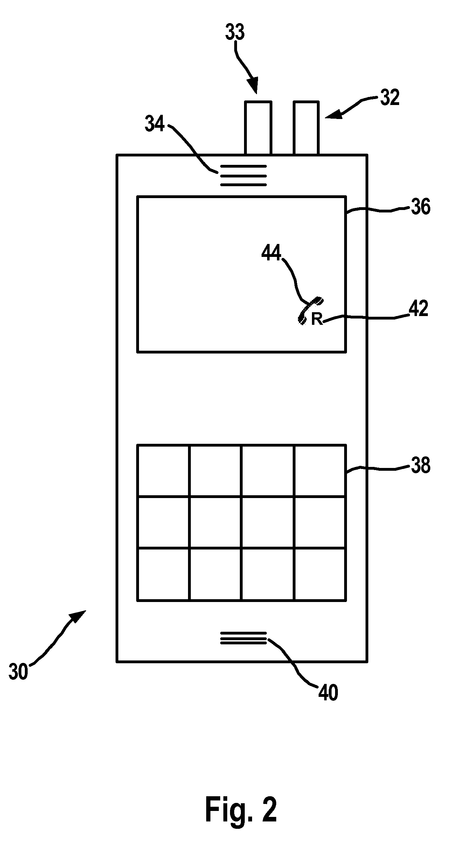

Figur 2 zeigt in schematischer Darstellung ein mobiles Kommunikationsgerät 30, das hier als Mobiltelefon ausgebildet ist. Dieses Kommunikationsgerät umfasst eine Antenne 32, einen Lautsprecher 34, ein Anzeigefeld 36, eine Tastatur 38 sowie ein Mikrofon 40.

Dieses hier vorgestellte mobile Kommunikationsgerät 30 ist zum Betrieb in einer örtlich begrenzten Telefonanlage ausgelegt, wobei dieses Kommunikationsgerät 30 über die Antenne 32 mit hier nicht dargestellten Funkstationen dieser Telefonanlage drahtlos Daten austauscht. Dabei kann die Telefonanlage, wie anhand der in Figur 1 dargestellten Telefonanlage 20, als Funkstationen Basisstationen 14 sowie die weiterhin vorgesehenen Signalstationen 16, 18 aufweisen. Das Kommunikationsgerät 30 tauscht innerhalb der gesamten Telefonanlage 20 mit den Basisstationen 14 über die Antenne 32 Signale und somit Daten aus. Eine Wechselwirkung des Kommunikationsgeräts 30 mit den Signalstationen 16, 18 erfolgt über eine Kommunikationsantenne 33. Je nachdem, von welcher der Signalstationen 16, 18 das Kommunikationsgerät 30 Signale empfängt, kann das Kommunikationsgerät 30 feststellen, in welchem Bereich, also ob in dem unbeschränkten oder dem beschränkten Bereich17, 19, es sich befindet. Aufgrund einer derartigen Ortskenntnis legt das Kommunikationsgerät 30 selbsttätig eine Kommunikationsfunktion fest, somit wird von dem Kommunikationsgerät 30 entschieden, ob Anrufe zu bestimmten weiteren Kommunikationsgeräten und somit weiteren Teilnehmern erlaubt oder verboten sind.

In der anhand von Figur 2 beschriebenen Ausführungsform ist vorgesehen, dass sich das Kommunikationsgerät 30 in dem beschränkten Bereich befindet. Dies wird durch das Anzeigesymbol "R" als Abkürzung für "restricted" und Hinweissignal 42 auf dem Anzeigefeld 36 des Kommunikationsgeräts 30 angezeigt. Einem Benutzer des Kommunikationsgeräts 30 ist somit klar, dass nunmehr lediglich Anrufe zu Teilnehmern der Telefonanlage getätigt werden können. Anrufe in eine Außenwelt, d.h. zu Teilnehmern außerhalb der Telefonanlage, sind nicht möglich. Durch das Hörersymbol als weiteres Hinweissignal auf dem Anzeigefeld des Kommunikationsgeräts 30 wird angezeigt, dass der Nutzer versucht, jemanden anzurufen. Falls sich der Nutzer nunmehr mit seinem Kommunikationsgerät 30 innerhalb des beschränkten Bereichs befindet und versucht, in die Außenwelt zu telefonieren, so wird auf dem Anzeigefeld 36 neben dem Hörersymbol 44 auch das Anzeigesymbol angezeigt, die in einer derartigen Situation mehrere Sekunden lang blinkt und somit anzeigt, dass ein Anruf in die Außenwelt unterbunden ist. Ergänzend kann über den Lautsprecher 34 ein Signalton, der als zusätzliches Hinweissignal ebenfalls anzeigt, dass die Anruffunktion unterbunden ist, ertönen.

## Patentansprüche

1. Verfahren zum Kontrollieren mindestens einer Kommunikationsfunktion eines mobilen Kommunikationsgeräts (30), wobei das mobile Kommunikationsgerät (30) zur Bestimmung seines Orts von mindestens einer lokalen Signalstation (16, 18) Signale empfängt und eine Durchführung der mindestens einen Kommunikationsfunktion von dem mobilen Kommunikationsgerät (30) in Abhängigkeit des bestimmten Orts selbsttätig erlaubt oder verboten wird.

2. Verfahren nach Anspruch 1, bei dem der Ort, an dem sich das mobile Kommunikationsgerät (30) befindet, von dem mobilen Kommunikationsgerät (30) selbsttätig bestimmt wird.

3. Verfahren nach Anspruch 1 oder 2, bei dem unterschieden wird, ob sich das mobile Kommunikationsgerät (30) in einem beschränkten Bereich (19) oder in einem unbeschränkten Bereich (17) befindet, wobei die mindestens eine Kommunikationsfunktion ermöglicht wird, wenn sich das mobile Kommunikationsgerät (30) in dem unbeschränkten Bereich (19) befindet, und wobei die mindestens eine Kommunikationsfunktion verboten wird, wenn sich das mobile Kommunikationsgerät (30) in dem beschränkten Bereich (17) befindet.

4. Verfahren nach einem der voranstehenden Ansprüche, bei dem für den Fall, dass die mindestens eine Kommunikationsfunktion für das mindestens eine mobile Kommunikationsgerät (30) verboten ist, für das mindestens eine mobile Kommunikationsgerät (30) lediglich eine Aufnahme einer Kommunikationsverbindung mit ausgewählten weiteren Kommunikationsgeräten gestattet ist, wohingegen eine Aufnahme einer Kommunikationsverbindung zu anderen Kommunikationsgeräten, die ausgeschlossen sind, unterbunden wird.

5. Verfahren nach einem der voranstehenden Ansprüche, bei dem durch mindestens ein Hinweissignal (42, 44), das von dem mobilen Kommunikationsgerät (30) bereitgestellt wird, angezeigt wird, ob die mindestens eine Kommunikationsfunktion erlaubt oder verboten ist.

6. Verfahren nach einem der voranstehenden Ansprüche, bei dem die mindestens eine lokale Signalstation (16, 18) eine Identitätskennung versendet, die eine Information über eine verbotene Kommunikationsfunktion beinhaltet.

7. Telefonanlage, die eine Anzahl lokale Signalstationen (16, 18) aufweist und der mindestens ein mobiles Kommunikationsgerät (30) zugeordnet ist, wobei das mindestens eine mobile Kommunikationsgerät (30) zur Bestimmung seines Orts von mindestens einer lokalen Signalstation (16, 18) Signale empfängt, und wobei das mindestens eine mobile Kommunikationsgerät (30) dazu ausgebildet ist, eine Durchführung mindestens einer Kommunikationsfunktion für das mindestens eine mobile Kommunikationsgerät (30) in Abhängigkeit des Orts selbsttätig zu erlauben oder zu verbieten.

8. Telefonanlage nach Anspruch 7, die mindestens eine Basisstation (14) aufweist, wobei diese mindestens eine Basisstation (14) dazu ausgebildet ist, zum Bereitstellen einer Kommunikationsverbindung zwischen dem mindestens einen mobilen Kommunikationsgerät (30) und einem weiteren Kommunikationsgerät mit dem mindestens einen mobilen Kommunikationsgerät (30) Signale auszutauschen.

9. Telefonanlage nach Anspruch 7 oder 8, der eine Anzahl weiterer Kommunikationsgeräte als Teilnehmer zugeordnet ist, wobei für den Fall, dass die mindestens eine Anruffunktion für das mindestens eine mobile Kommunikationsgerät (30) verboten ist, für das mindestens eine mobile Kommunikationsgerät (30) lediglich eine Aufnahme einer Kommunikationsverbindung mit den weiteren Kommunikationsgeräten der Telefonanlage gestattet ist, wohingegen eine Aufnahme einer Kommunikationsverbindung zu anderen Kommunikationsgeräten, die nicht der Telefonanlage zugeordnet sind, unterbunden wird.

10. Mobiles Kommunikationsgerät, das dazu ausgebildet ist, zur Bestimmung seines Orts von mindestens einer lokalen Signalstation (16, 18) Signale zu empfangen und eine Durchführung mindestens eine Kommunikationsfunktion in Abhängigkeit des Orts selbsttätig zu erlauben oder zu verbieten.

11. Mobiles Kommunikationsgerät nach Anspruch 10, das dazu ausgebildet ist, mindestens ein Hinweissignal (42, 44) bereitzustellen, wobei durch dieses mindestens eine Hinweissignal (42, 44) angezeigt wird, ob die mindestens eine Kommunikationsfunktion erlaubt oder verboten ist.

12. Computerprogramm mit Programmcodemitteln, um alle Schritte eines Verfahrens nach einem der Ansprüche 1 bis 6 durchzuführen, wenn das Computerprogramm auf einem Computer oder einer entsprechenden Recheneinheit, insbesondere in einem mobilen Kommunikationsgerät (30) nach Anspruch 10 oder 11, ausgeführt wird.

13. Computerprogrammprodukt mit Programmcodemitteln, die auf einem computerlesbaren Datenträger gespeichert sind, um alle Schritte eines Verfahrens nach einem der Ansprüche 1 bis 6 durchzuführen, wenn das Computerprogramm auf einem Computer oder einer entsprechenden Recheneinheit, insbesondere in einem mobilen Kommunikationsgerät (30) nach Anspruch 10 oder 11, ausgeführt wird.
